# EUROPÄISCHE PATENTSCHRIFT

(11) **EP 1 064 529 B1**
(45) Veröffentlichungstag und Bekanntmachung des Hinweises auf die Patenterteilung: **04.06.2003**
(21) Anmeldenummer: 98965101.3
(22) Anmeldetag: 07.12.1998
(51) Int. Cl.: G01M 3/36

(54) **VERFAHREN UND VORRICHTUNG ZUR ÜBERPRÜFUNG DER DICHTIGKEIT VON EVAKUIERTEN VERPACKUNGSBEHÄLTERN**
METHOD AND DEVICE FOR CHECKING THE TIGHTNESS OF AIR EVACUATED PACKING CONTAINERS
PROCEDE ET DISPOSITIF POUR CONTROLER L'ETANCHEITE DE CONTENANTS D'EMBALLAGE DONT L'AIR A ETE EVACUE

(30) Priorität: 26.03.1998 DE 19813288
(43) Veröffentlichungstag der Anmeldung: 03.01.2001
(73) Patentinhaber: ROBERT BOSCH GMBH, 70442 Stuttgart (DE)
(72) Erfinder: WEBER, Helmut, D-71384 Weinstadt-Beutelsbach (DE); STADEL, Hans-Peter, D-73547 Lorch (DE)
(86) Internationale Anmeldenummer: DE9803576
(87) Internationale Veröffentlichungsnummer: WO99049291

(56) Entgegenhaltungen:
- EP-A- 0 181 722
- EP-A- 0 277 458
- DE-A- 4 412 763
- US-A- 4 663 964
- US-A- 4 715 215
- US-A- 4 899 574
- US-A- 5 111 684
- PATENT ABSTRACTS OF JAPAN vol. 015, no. 391 (P-1259), 3. Oktober 1991 & JP 03 156336 A (YOSHINO KOGYOSHO CO LTD), 4. Juli 1991
- PATENT ABSTRACTS OF JAPAN vol. 006, no. 082 (P-116), 20. Mai 1982 & JP 57 017833 A (COSMO KEIKI:KK), 29. Januar 1982

## Beschreibung

Die Erfindung betrifft Verfahren und Vorrichtungen zur Überprüfung der Dichtigkeit von evakuierten Verpackungsbehältern nach den Oberbegriffen der unabhängigen Ansprüche, wie sie aus der US 4,899,574 bekanntgeworden sind. Hierbei wird eine glockenförmige Prüfeinrichtung in Anlagekontakt mit einer flexiblen Wandung des Verpackungsbehälters gebracht. Anschließend wird der Innenraum der Prüfeinrichtung evakuiert, wobei sich die Wandung des Verpackungsbehälters in Richtung der Prüfeinrichtung bewegt. Die Bewegung wird von einem Abstandssensor erfasst und einer Auswerteschaltung zugeführt. Die Auswerteschaltung erkennt anhand des charakteristischen Verlaufs der Bewegung der Packungswand über der Zeit, ob der Verpackungsbehälter dicht oder undicht ist.

Bei heutigen Hochleistungsverpackungsanlagen, die beispielsweise über 100 Vakuumkaffeepackungen pro Minute herstellen können, ist es neben der Aussage, ob die Packungen dicht oder undicht sind darüber hinaus wichtig zu wissen, wie hoch der in den Packungen jeweils herrschende Packungsinnendruck ist. Weiterhin ist es im Rahmen einer Prozeßüberwachung der Verpackungsanlage erforderlich festzustellen, wie sich die in den Packungen erzielten Packungsinnendrücke verändern, damit gegenbenfalls Einstellwerte an der Verpackungsanlage geändert werden können. Derartige Informationen können mit dem bekannten Prüfverfahren nicht gewonnen werden.

Aus der EP 181 722 A1 ist es ferner bekannt, zur Überprüfung von Packungen die Packung in einer geschlossenen Vakuumkammer anzuordnen, und die Position einer Wandung der Packung mittels eines Abstandssensors zu erfassen. Sobald sich beim Evakuieren der Vakuumkammer die Packungswand bewegt wird daraus geschlossen, dass der Druck in der Vakuumkammer dem Druck in der Packung entspricht. Mit der bekannten Vorrichtung ist bei hohen Leistungen der Verpackungsanlage aus Gründen der geringen Taktzeit nur eine stichprobenartige Überprüfung der Packungen möglich.

Weiterhin ist es aus der EP 0 277 458 A1 bekannt, die Position einer Packungswand, welche sich in einer Vakuumkammer befindet, zusammen mit den Druckwerten, welche sich während des Evakuierens einstellen, einer Steuereinrichtung zuzuführen, welche aus einer Verknüpfung der Position der Packungswand und dem Unterdruck in der Vakuumkammer auf die Dichtigkeit der Packung schließt. Auch diese vorbekannte Vorrichtung ist durch die Vakuumkammer, in der die Packung zuerst eingebracht werden muss, für eine 100%-Kontrolle bei hohen Stückzahlen der Verpackungsanlage ungeeignet.

Aufgabe der Erfindung ist es, das aus der US 4,899,574 vorbekannte verfahren und Meßsystem derart weiterzubilden, dass aus einer Verknüpfung des Zeitverlaufs der Position der Packungswand und dem Zeitverlauf des in dem glockenförmigen Gehäuse herrschenden Unterdruck eine Aussage über die Dichtigkeit der Packungen möglich ist. Diese Aufgabe wird mit den kennzeichnenden Merkmalen der beiden unabhängigen Verfahrensansprüche 1 und 4 gelöst. Die Aufgabe wird ebenfalls gelöst mit den kennzeichnenden Merkmalen der unabhängigen Vorrichtungsansprüche 8 und 10.

Vorteilhafte Weiterbildungen der erfindungsgemäßen Verfahren und Vorrichtungen zur Überprüfung der Dichtigkeit von evakuierten Verpackungsbehältern sind in den abhängigen Ansprüchen angegeben. Insbesondere ist es gemäß bevorzugten Ausführungsformen der Erfindung möglich, nicht nur eine qualitative Aussage über die Dichtig- bzw. Undichtigkeit der Packungen zu treffen, sondern es ist auch möglich, den Packungsinnendruck mit hinreichender Genauigkeit zu bestimmen.

Ausführungsbeispiele der Erfindung sind in der Zeichnung dargestellt und werden im Folgenden näher erläutert.

Es zeigen
Figur 1 den schematischen Aufbau einer Prüfeinrichtung in einer Seitenansicht und teilweise im Schnitt,
Figur 2 einen Teil der Prüfeinrichtung gemäß Figur 1 während der Prüfung einer Packung und die
Figuren 3 und 4 Meßkurven des Unterdrucks und des Abstandssensors während jeweils einer Messung an einer Packung.

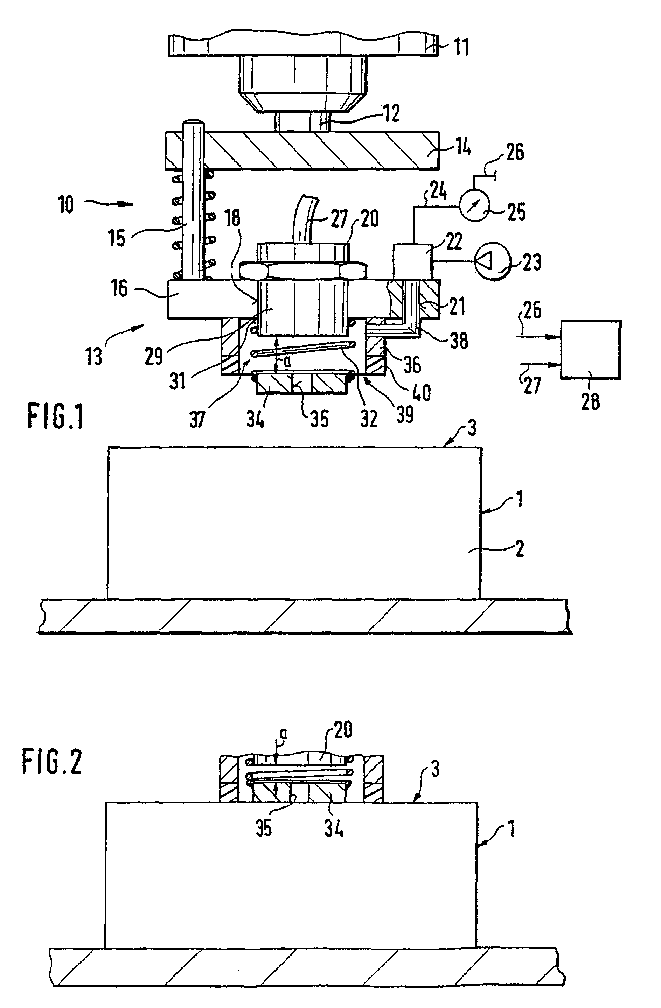

Die in der Figur 1 dargestellte Vorrichtung 10 ist Bestandteil einer Verpackungsanlage zum Herstellen von mit einem Lebensmittel wie beispielsweise Kaffee befüllten und anschließend evakuierten und mittels einer Siegelnaht dicht verschlossenen Packungen 1. Die Packungen 1, von denen in der Figur 1 lediglich eine Packung 1 dargestellt ist, sind nacheinander unterhalb der Vorrichtung 10 mittels einer an sich bekannten Fördereinrichtung vorbeiförderbar. Die quaderförmige Packung 1 besteht aus einer kunststoff- oder aluminiumbeschichteten Folie 2, und hat zumindest auf der der Vorrichtung 10 zugewandten Seite eine wenigstens teilweise ebene und flexible Packungswand 3.

Die Vorrichtung 10 weist eine Säule 11 auf, an deren unterem Ende ein vorzugsweise mittels eines Pneumatikzylinders 12 auf- und abbeweglicher Meßkopf 13 angeordnet ist. Um eine Anpassung an verschiedene Packungsformate zu ermöglichen, ist der Pneumatikzylinder 12 mit einer Zwischenplatte 14 verbunden, die über ein federgedämpftes Zwischenstück 15 mit einer Trägerplatte 16 gekoppelt ist. In der Trägerplatte 16 ist eine erste Ausnehmung 18 zur Aufnahme eines induktiv arbeitenden Abstandssensors 20 und eine zweite Ausnehmung 21 zur Aufnahme eines Unterdruckanschlusses 22 ausgebildet, der mit einer Unterdruckquelle 23 verbunden ist. Vom Unterdruckanschluß 22 zweigt eine Leitung 24 ab, an die ein Druckmeßgerät 25 angeschlossen ist. Sowohl die Signale des Abstandssensors 20 als auch die des Druckmeßgeräts 25 sind über Leitungen 26, 27 der Steuereinrichtung 28 der Vorrichtung 10 als Eingangswerte zuführbar.

Ein zylindrischer Abschnitt 29 des Abstandssensors 20 durchdringt die erste Ausnehmung 18 und ragt aus der Unterseite 31 der Trägerplatte 16 heraus. Der aus der Unterseite 31 herausragende Teil des Abschnitts 29 ist von einer Druckfeder 32 umfaßt, welche an ihrem der Unterseite 31 abgewandten Ende eine Meßplatte 34 trägt. In der Meßplatte 34 ist mittig ein Loch 35 ausgebildet. In der in der Figur 1 dargestellten Position des Abstandssensors 20, in der dieser von der Packungswand 3 beabstandet ist, befindet sich die Meßplatte 34 in einem Abstand a von der zugewandten Seite des Abscandssensors 20. Der aus der Unterseite 31 der Trägerplatte 16 herausragende Abschnitt 29 des Abstandssensors 20 und die Druckfeder 32 sind von einem im wesentlichen hülsenförmigen Gehäuse 36 umgeben, das zusammen mit der Unterseite 31 einen glockenförmigen Raum begrenzt. Zwischen der Gehäusewand und dem Abstandssensor 20 ist im Gehäuse 36 ein Innenraum 37 ausgebildet, der mit dem Unterdruckanschluß 22 mittels einer Verbindung 38 gekoppelt ist. Die Höhe des dichtend mit der Unterseite 31 der Trägerplatte 16 verbundenen Gehäuses 36 ist derart, daß es den umgebenden Abstandssensor 20 überragt, wobei in unbelastetem Zustand die Meßplatte 34 aus der unteren Gehäuseöffnung 39 herausragt. Die Gehäuseöffnung 39 ist von einer umlaufenden, aus flexiblem Material wie Silikon oder Gummi bestehenden Dichtung 40 begrenzt, die Unebenheiten in der Packungswand 3 ausgleicht, so daß bei aktivierter Unterdruckquelle 23 möglichst keine Umgebungsluft zwischen der Packungswand 3 und dem Abstandssensor 20 in den Innenraum 37 des Gehäuses 36 gelangt, da dies ansonsten den zeitlichen Ablauf der Messung beeinflussen würde.

Zur Beschreibung der Funktionsweise der Vorrichtung 10 wird vorab folgendes grundsätzlich- Verhalten einer evakuierten Packung 1 erläutert, bei der auf die Packungswand 3 einerseits der (bei einer dichten Packung 1 stets gleiche) Packungsinnendruck Pi und andererseits ein veränderlicher Außendruck einwirkt: Wenn das Gehäuse 36 und die Meßplatte 34 mit der Packungswand 3 in Anlagekontakt gebracht und anschließend die Unterdruckquelle 23 aktiviert wird, so sinkt der Absolutdruck im Innenraum 37 des Gehäuses 36, ausgehend vom Atmosphärendruck, ab. Solange der Absolutdruck im Innenraum 37 höher ist als der Packungsinnendruck Pi, bewegt sich die Packungswand 3 nicht. Eine Bewegung der Packungswand 3 in Richtung des Gehäuses 36 bzw. des Abstandssensors 20 erfolgt erst, wenn der Absolutdruck im Innenraum 37 geringer ist als der Packungsinnendruck Pi. Dabei wölbt sich die Packungswand 3 und kann ggf. sogar eine Blase ausbilden.

Ferner ist zu berücksichtigen, daß die an der Packungswand 3 anliegende Dichtung 40 des Gehäuses 36 aufgrund ihrer Elastizität bewirkt, daß sich die Meßplatte 34 bei absinkendem Absolutdruck im Innenraum 37 in Richtung der Unterseite 31 bewegt. Diese Bewegung wird vom Abstandssensor 20 wie eine Bewegung der Packungswand 3 erfaßt. Da diese Bewegung aber nur aufgrund der Elastizität der Dichtung 40 erfolgt, gilt es diese bei der Messung zu berücksichtigen.

Bei den beiden nachfolgend beschriebenen erfindungsgemäßen Prüfverfahren wird sowohl der im Innenraum 37 herrschende Druck P, als auch die vom Abstandssensor 20 erzeugte Spannung U, die beispielsweise proportional zum Abstand a der Meßplatte 34 zum Abstandssensor 20 ist, ständig erfaßt, und der Steuereinrichtung 28 als Eingangsgröße zugeführt, welche die beiden Meßgrößen miteinander verknüpft.

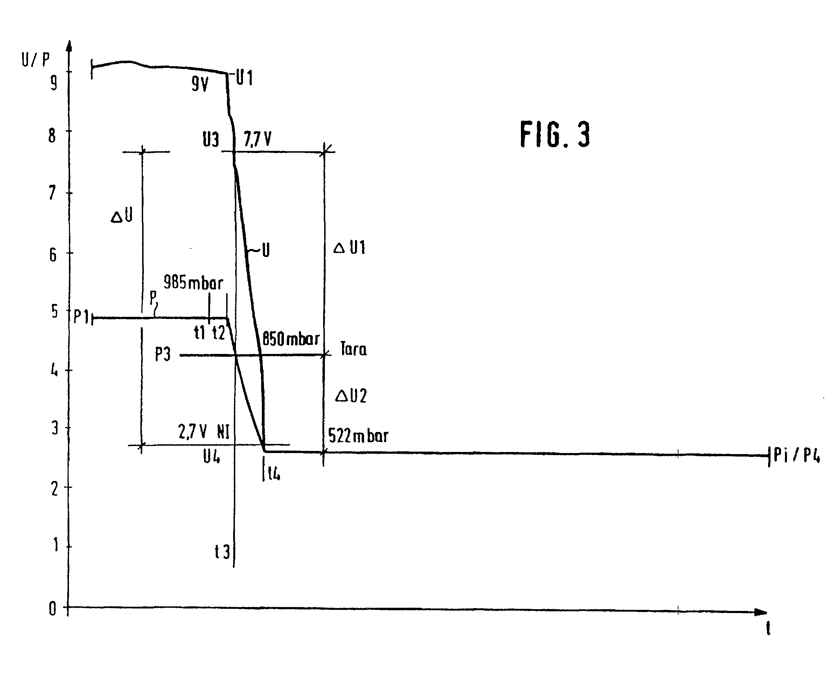

Bei dem anhand der Figur 3 erläuterten ersten erfindungsgemäßen Prüfverfahren, bei der sowohl der Druck P als auch die Spannung U über der Zeit t dargestellt sind, stellt t1 den Beginn der Messung dar, an dem die Meßplatte 34 des Abstandssensors 20 bereits in Anlagekontakt mit der Packungswand 3 ist, und bei dem beispielsweise ein Druck P von 985 mbar (Atmosphärendruck) und eine Spannung U1 von 9 V gemessen wird. Nunmehr wird die Unterdruckquelle 23 aktiviert, welche mit geringer zeitlicher Verzögerung (typischerweise ca. 30 msek) den Innenraum 37 des Gehäuses 36 ab dem Zeitpunkt t2 mit dem Prüfvakuum (hier 200 mbar absolut) beaufschlagt. Daraufhin nimmt der gemessene Druck P im Innenraum 37 in expotentieller Form ab.

In dem Augenblick, in dem der Druck P3 im Innenraum 37 zum Zeitpunkt t3 einen in der Steuereinrichtung 28 vorgegebenen Druck von im Beispiel 850 mbar erreicht hat, wird die zugehörige Spannung U3 von 7,7 V erfaßt und abgespeichert. Der Druck P3 von 850 mbar ist als "Tara"-Wert in der Steuereinrichtung 28 vorgegeben, um die oben angesprochenen Störgrößen wie Unebenheiten in der Packungswand 3 oder ein Nachlassen der Dichtungselastizität der Dichtung 40 zu minimieren. Mit anderen Worten gesagt bedeutet dies, daß ab einem Druck P3 im Innenraum 37 von 850 mbar davon ausgegangen wird, daß die Dichtung 40 nunmehr dichtend an der Packungswand 3 anliegt, so daß keine Umgebungsluft mehr in den Innenraum 37 des Gehäuses 36 gelangt.

Von dieser "Tara"-Spannung U3 von 7,7 V zieht die Steuereinrichtung 28 einen ebenfalls vorgegebenen Wert ΔU, hier 5 V ab, woraus sich ein Spannungswert U4 von 2,7 V errechnet.

Der Wert ΔU von 5 V entspricht der Summe aus einem ersten Weganteil ΔU1, der sich aufgrund des bereits angesprochenen elastischen Verformens der Dichtung 40 bei abnehmendem Druck P im Innenraum 37 einstellt und einem zweiten Weganteil ΔU2, der sich aufgrund der Bewegung der Packungswand 3 ergibt, wenn der Druck P im Innenraum 37 geringer wird als der Packungsinnendruck Pi, so daß sich die Packungswand 3 in Richtung des Abstandssensors 20 bewegt.

Der in der Steuereinrichtung 28 abgespeicherte Wert ΔU von 5 V, den man auch als Schalt- oder Ansprechschwelle für die Bewegung der Packungswand 3 bezeichnen könnte, wurde vorab anhand von Versuchen ermittelt. Seine Größe hängt im wesentlichen von dem zu erwartenden Packungsinnendruck Pi einer dichten Packung 1 ab. Aus den beschriebenen Zusammenhängen ergibt sich, daß der Wert ΔU umso größer ist, desto geringer der erwartete Packungsinnendruck Pi ist, da sich dann ein größerer erster Weganteil ΔU1 aufgrund eines größeren elastischen Verformungswegs der Dichtung 40 einstellt.

Sobald der von der Steuereinrichtung 28 errechnete Spannungswert U4 von 2,7 V zum Zeitpunkt t4 erreicht ist, wird der zugehörige Druck P4 im Innenraum 37, hier ca. 520 mbar, in der Steuereinrichtung 28 gespeichert und ggf. gleichzeitig optisch ausgegeben. Dieser Druck P4 wird als Packungsinnendruck Pi bewertet, da bei diesem Druck P4 sich die Packungswand 3 in Richtung des Abstandssensors 20 bewegt hat. Gleichzeitig ist die Messung an dieser Packung 1, die typischerweise insgesamt höchstens ca. 200 msek dauert, beendet.

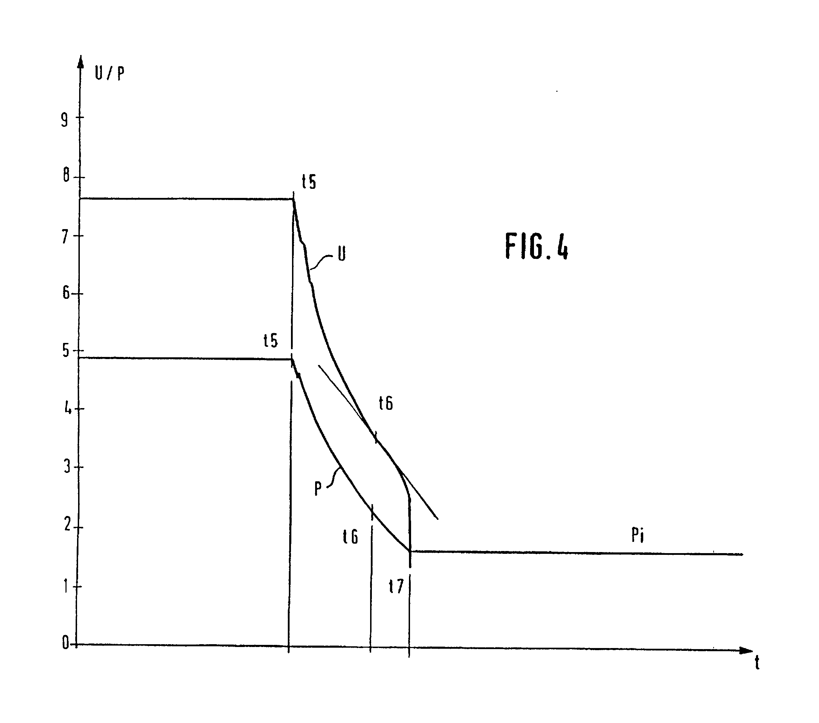

Bei dem nunmehr anhand der Figur 4 beschriebenen zweiten erfindungsgemäßen Prüfverfahren wird sich die Beobachtung zunutze gemacht, daß sich die Spannung U des Abstandssensors 20 beim Evakuieren des Innenraums 37 zuerst in ähnlicher Weise verhält wie der Druck P. Nimmt zum Beispiel der Druck P in expotentieller Form ab, so ändert sich auch die Spannung U in expotentieller Form. Sobald jedoch der Druck P im Innenraum 37 des Gehäuses 36 dem Packungsinnendruck Pi entspricht, beginnt sich bei weiterer Verringerung des Drucks P im Innenraum 37 die Packungswand 3 plötzlich in Richtung des Abstandssensors 20 zu bewegen. Bei dieser Bewegung der Packungswand 3 bildet sich die bereits angesprochene Blase aus. Anders ausgedrückt heißt das, daß sich die Spannung U (bzw. der Abstand a der Packungswand 3 zum Abstandssensor 20) ab einem Druck P, der dem Packungsinnendruck Pi entspricht, schlagartig verkleinert.

Betrachtet man nun den Verlauf der Spannung U und des Druckes P in der Figur 4 zwischen dem Beginn des Evakuierens des Innenraums 37 zum Zeitpunkt t5 und einem nachfolgenden Zeitpunkt t6, so erkennt man den parallelen Verlauf der beiden Kennlinien von U und P, die beide eine expotentielle Form aufweisen. Ab dem Zeitpunkt t6 beginnt jedoch die Spannung U sich schneller zu veringern als der Druck P. Dies erkennt man darin, daß im Zeitpunkt t6 der Kurvenverlauf der Spannung U mathematisch gesehen einen Wendepunkt aufweist. Wesentlich für das zweite erfindungsgemäße Prüfverfahren ist, daß die Steuereinrichtung 28 diesen Wendepunkt im Kurvenverlauf der Spannung U zum Zeitpunkt t6 erkennt. Dies ist jedoch erst ab einem charakteristischen Zeitpunkt t7 möglich, wenn aufgrund der ab dem Zeitpunkt t6 nachfolgenden Spannungswerte U feststeht, daß im Zeitpunkt t6 ein Wendepunkt vorhanden ist. Die Größe der Zeitspanne zwischen t6 und t7 ist im wesentlichen abhängig von der Qualität des Auswerteprogramms für die Spannungswerte U in der Steuereinrichtung 28 sowie der Auflösung der Meßwerte U und P.

Um analog zum ersten Prüfverfahren sicher zu sein, daß sich die Packungswand 3 bereits bewegt, das heißt, daß der Packungsinnendruck Pi im Innenraum 37 des Gehäuses 36 sicher erreicht wird, wird entsprechend der Figur 4 der Druck P zum Zeitpunkt t7 als Packungsinnendruck Pi von der Steuereinrichtung 28 erfaßt, und nicht der Druck P zum Zeitpunkt t6, bei dem der Kurvenverlauf von U den Wendepunkt aufweist.

In einer Abwandlung des zweiten erfindungsgemäßen Prüfverfahrens ist es auch denkbar, nicht den Wendepunkt der Spannung U zu erfassen, sondern einen in der Steuereinrichtung 28 abgelegten Grenzwert für jeweils an den Kurvenverlauf der Spannung U angelegte Tangenten. Dies resultiert aus der bereits beschriebenen Überlegung, daß sich der Abstand a der Packungswand 3 zum Abstandssensor 20 beim Erreichen des Packungsinnendrucks in dem Innenraum 37 schlagartig verringert, d.h. dU/dt einen bestimmten Grenzwert überschreitet.

Es hat sich erwiesen, daß mit den beiden erfindungsgemäßen Prüfverfahren eine Meßgenauigkeit besser als +/- 20 mbar für die Packungsinnendrücke Pi der Packungen 1 erreicht werden kann. Eine derartige Genauigkeit ist für übliche Verpackungsanlagen vollkommen ausreichend.

Wenn die Packungsinnendrücke Pi von nacheinander hergestellten Packungen 1 miteinander verglichen werden, so ist es mit den beiden oben beschriebenen Prüfverfahren möglich, die den Evakuiergrad der Packungen 1 bestimmenden Fertigungsschritte der Verpackungsanlage zu überwachen. Insbesondere ist es bei der Wahl entsprechender Eingriffsgrenzen bezüglich der ermittelten Packungsinnendrücke Pi moglich, bei abnehmenden Packungsinnendrücken Pi Änderungen an den Fertigungsschritten einzuleiten, solange die Packungsinnendrücke Pi absolu gesehen noch zufriedenstellend sind. Dadurch läßt sich die Herstellung nicht genügend evakuierter Packungen 1 verhindern. Gleichzeitig dienen die erfassten Packungsinnendrücke Pi als Nachweis für die Prozeßfähigkeit der Verpackungsanlage.

Bisher wurden die beiden Prüfverfahren immer im Zusammenhang mit dichten Packungen 1 beschrieben. Es ergibt sich von selbst, daß es mit den Prüfverfahren jedoch sehr einfach möglich ist, undichte bzw. nicht genügend dichte Packungen 1 zu erkennen: solche Packungen 1 werden dadurch erkannt, daß die Bewegung der Packungswand 3 bereits bei einem noch relativ hohen Druck P im Innenraum 37 des Gehäuses 36 beginnt. Dies ist mit einem entsprechenden Auswerteprogramm oder Mindestdrücken, die im Innenraum 37 mindestens erreicht werden müssen, bevor sich die Spannung U übermäßig stark ändert, von der Steuereinrichtung 28 sehr einfach erkennbar. Packungen 1, die zwar dicht sind, jedoch aufgrund von Fehlern im Fertigungsprozeß nicht genügend evakuiert wurden, werden dadurch erkannt, daß die ausgegebenen Druckwerte P für den Packungsinnendruck Pi oberhalb eines festgelegten Toleranzwertes liegen.

Die beschriebene Vorrichtung 10 ist bevorzugt als stationäre Meßeinrichtung in dem Fertigungsablauf der Packungen 1 integriert. Aufgrund der geringen Meßzeit ist es dabei durchaus möglich, alle hergestellten Packungen 1 zu überprüfen. Für mobile Einsatzzwecke oder für Qualitätssicherungsabteilungen ist es jedoch auch möglich, die Vorrichtung 10 als mobile Vorrichtung auszubilden. In diesem Fall ist keine Säule 11 und kein Pneumatikzylinder 12 erforderlich. Vielmehr wird das Gehäuse 36 manuell mit der jeweiligen Packungswand 3 in Anlagekontakt gebracht, und das Evakuieren zum Beispiel ebenfalls manuell eingeleitet.

Ferner ist es selbstverständlich denkbar, anstelle eines induktiv und mit einer Meßplatte 34 arbeitenden Abstandssensors 20 einen kapazitiv, optisch oder mittels Ultraschall arbeitenden Abstandssensor zu verwenden. Ein derartiger, ggf. berührungslos arbeitender Abstandsensor kann nach Art des zu überprüfenden Verpackungsbehälters gegenüber dem induktiv arbeitenden Sensor vorteilhaft sein.

## Patentansprüche

1. Verfahren zur Überprüfung der Dichtigkeit von evakuierten Verpackungsbehältern (1), die jeweils wenigstens eine flexible Packungswand (3) aufweisen, wobei eine ein glockenförmiges Gehäuse (36) aufweisende Prüfvorrichtung (10) in dichtendem Anlagekontakt mit der flexiblen Packungwand (3) gebracht wird, worauf der Innenraum (37) der Prüfvorrichtung (10) mit Unterdruck beaufschlagt wird, dessen Größe einer Steuereinrichtung (28) als Eingangswert zugeführt wird, so dass die flexible Packungswand (3) infolge des Unterdrucks aus ihrer ursprünglichen Position bewegt wird, sobald der Druck (P) in dem glockenförmigen Gehäuse (36) geringer ist als der Packungsinnendruck (Pi), wobei die Position (U) der Packungswand (3) von einem Sensor (20) erfasst und ebenfalls der Steuereinrichtung (28) als Eingangswert zugeführt wird, welche aufgrund des zeitlichen Verlaufs der Position (U) der Packungswand (3) auf die Dichtigkeit des Verpackungsbehälters (1) schließt, **dadurch gekennzeichnet, dass** der Zeitverlauf des in dem glockenförmigen Gehäuse (36) herrschenden Drucks (P) und der Zeitverlauf der Position (U) der Packungswand (3) miteinander verknüpft werden, wobei die Position (U3) der Packungswand (3) bei einem ersten vorgegebenen Druck (P3) im Innenraum (37) der Prüfvorrichtung (10) erfasst wird, dass anhand dieser Position (U3) mittels einer vorgegebenen Konstante (ΔU) eine neue Position (U4) der Packungswand (3) von der Steuereinrichtung (28) berechnet wird und dass der Druck (P4) im Innenraum (37) der Prüfvorrichtung (10) bei der neuen Position (U4) als Kriterium für die Dichtigkeit des Verpackungsbehälters (1) dient.

2. Verfahren nach Anspruch 1, **dadurch gekennzeichnet, dass** der Druck (P4) als Packungsinnendruck (Pi) betrachtet wird.

3. Verfahren nach Anspruch 1 oder 2, **dadurch gekennzeichnet, dass** sich die Konstante (ΔU) aus einem ersten Wegabschnitt (ΔU1) aufgrund eines elastischen Verhaltens eines Teils (40) der Prüfvorrichtung (10) und einem zweiten Wegabschnitt (ΔU2) aufgrund einer Bewegung der Packungswand (3) ergibt.

4. Verfahren zur Überprüfung der Dichtigkeit von evakuierten Verpackungsbehältern (1), die jeweils wenigstens eine flexible Packungswand (3) aufweisen, wobei eine ein glockenförmiges Gehäuse (36) aufweisende Prüfvorrichtung (10) in dichtendem Anlagekontakt mit der flexiblen Packungswand (3) gebracht wird, worauf der Innenraum (37) der Prüfvorrichtung (10) mit Unterdruck beaufschlagt wird, dessen Größe einer Steuereinrichtung (28) als Eingangswert zugeführt wird, so dass die flexible Packungswand (3) infolge des Unterdrucks aus ihrer ursprünglichen Position bewegt wird, sobald der Druck (P) in dem glockenförmigen Gehäuse (36) geringer ist als der Packungsinnendruck (Pi), wobei die Position (U) der Packungswand (3) von einem Sensor (20) erfasst und ebenfalls der Steuereinrichtung (28) als Eingangswert zugeführt wird, welche aufgrund des zeitlichen Verlaufs der Position (U) der Packungswand (3) auf die Dichtigkeit des Verpackungsbehälters (1) schließt, **dadurch gekennzeichnet, dass** der Zeitverlauf des in dem glockenförmigen Gehäuse (36) herrschenden Drucks (P) und der Zeitverlauf der Position (U) der Packungswand (3) miteinander verknüpft werden, wobei sich der Zeitverlauf der Position (U) der Packungswand (3) in einem Zeitraum zwischen zwei Zeitpunkten (t5, t6) zu Beginn der Überprüfung des Verpackungsbehälters (1) aufgrund eines elastischen Elements (40) der Prüfvorrichtung (10) in ähnlicher Weise verhält wie der Zeitverlauf des Drucks (P) und dass der Zeitpunkt (t6), ab dem sich der Zeitverlauf der Position (U) in nichtähnlicher Weise zum Zeitverlauf des Drucks (P) verhält als Kriterium für die Dichtigkeit des Verpackungsbehälters (1) dient.

5. Verfahren nach Anspruch 4, **dadurch gekennzeichnet, dass** der Zeitverlauf der Position (U) der Packungswand (3) zum Zeitpunkt (t6) einen Wendepunkt aufweist.

6. Verfahren nach Anspruch 5, **dadurch gekennzeichnet, dass** die Steuereinrichtung (28) den Wendepunkt des Zeitverlaufs der Position (U) der Packungswand (3) als solchen zu einem Zeitpunkt (t7) erfasst, der nach dem Zeitpunkt (t6) des Wendepunktes liegt und dass der Druck (P) zu diesem späteren Zeitpunkt (t7) als Packungsinnendruck (Pi) bewertet wird.

7. Verfahren nach Anspruch 4, **dadurch gekennzeichnet, dass** zusätzlich der Zeitpunkt erfasst wird, bei dem die Steigung des Zeitverlaufs der Position (U) der Packungswand (3) einen vorgegebenen Grenzwert überschreitet und dass der Druck (P) in diesem Zeitpunkt als Packungsinnendruck (Pi) bewertet wird.

8. Vorrichtung (10) zum Durchführen des Verfahrens nach einem der Ansprüche 1 bis 3, mit einem glockenförmigen Gehäuse (36), das in dichtendem Anlagekontakt mit einer flexiblen Packungswand (3) angeordnet ist, wobei der Innenraum (37) des Gehäuses (36) mittels einer Unterdruckquelle (33) evakuierbar ist, mit einem Unterdrucksensor (25) zum Erfassen des Drucks (P) im Innenraum (37) und mit einem Abstandssensor (20) zum Erfassen der Position (U) der flexiblen Packungswand (3) des Verpackungsbehälters (1), welcher die Position (U) in ein Spannungssignal umsetzt, **dadurch gekennzeichnet, dass** die Vorrichtung eine Steureinrichtung (28) enthält, die so eingerichtet ist, dass der Zeitverlauf des in dem glockenförmigen Gehäuse (36) herrschenden Drucks (P) und der Zeitverlauf der Position (U) der Packungswand (3) miteinander verknüpft werden, wobei die Position (U3) der Packungswand (3) bei einem ersten vorgegebenen Druck (P3) im Innenraum (37) der Prüfvorrichtung (10) erfasst wird, dass anhand dieser Position (U3) mittels einer vorgegebenen Konstante (ΔU) eine neue Position (U4) der Packungswand (3) von der Steuereinrichtung (28) berechnet wird und dass der Druck (P4) im Innenraum (37) der Prüfvorrichtung (10) bei der neuen Position (U4) als Kriterium für die Dichtigkeit des Verpackungsbehälters (1) dient.

9. Vorrichtung nach Anspruch 8, **dadurch gekennzeichnet, dass** das Gehäuse (36) auf der der Packungswand (3) zugewandten Seite ein elastisches Dichtungselement (40) hat.

10. Vorrichtung (10) zum Durchführen des Verfahrens nach einem der Ansprüche 4 bis 7, mit einem glockenförmigen Gehäuse (36), das in dichtendem Anlagekontakt mit einer flexiblen Packungswand (3) angeordnet ist, wobei der Innenraum (37) des Gehäuses (36) mittels einer Unterdruckquelle (33) evakuierbar ist, mit einem Unterdrucksensor (25) zum Erfassen des Drucks (P) im Innenraum (37) und mit einem Abstandssensor (20) zum erfassen der Position (U) der flexiblen Packungswand (3) des Verpackungsbehälters (1), welcher die Position (U) in ein Spannungssignal umsetzt, **dadurch gekennzeichnet, dass** die Vorrichtung eine Steuereinrichtung (28) enthält, die so eingerichtet ist, dass der Zeitverlauf des in dem glockenförmigen Gehäuse (36) herrschenden Drucks (P) und der Zeitverlauf der Position (U) der Packungswand (3) miteinander verknüpft werden, wobei sich der Zeitverlauf der Position (U) der Packungswand (3) in einem Zeitraum zwischen zwei Zeitpunkten (t5, t6) zu Beginn der Überprüfung des Verpackungsbehälters (1) aufgrund eines elastischen Elements (40) der Prüfvorrichtung (10) in ähnlicher Weise verhält wie der Zeitverlauf des Drucks (P) und dass der Zeitpunkt (t6), ab dem sich der Zeitverlauf der Position (U) in nichtähnlicher Weise zum Zeitverlauf des Drucks (P) verhält als Kriterium für die Dichtigkeit des Verpackungsbehälters (1) dient.

11. Vorrichtung nach einem der Ansprüche 8 bis 10, **dadurch gekennzeichnet, dass** der Abstandssensor (20) ein Tastelement (34) aufweist, das von der Kraft einer Feder (32) beaufschlagt ist und das in Anlagekontakt mit der Packungswand (3) bringbar ist.

12. Vorrichtung nach Anspruch 11, **dadurch gekennzeichnet, dass** das Tastelement (34) scheibenförmig ausgebildet ist.

13. Vorrichtung nach einem der Ansprüche 8 bis 12, **dadurch gekennzeichnet, dass** der Abstandssensor als induktiver Sensor (20) ausgebildet ist.

## Claims

1. Method of checking the tightness of evacuated packing containers (1) which each have at least one flexible pack wall (3), a testing device (10) having a bell-shaped housing (36) being brought into sealing contact with the flexible pack wall (3), whereupon the interior (37) of the testing device (10) has a vacuum applied to it whose magnitude is fed to a control device (28) as an input variable, so that the flexible pack wall (3) is moved from its original position as a result of the vacuum as soon as the pressure (P) in the bell-shaped housing (36) is lower than the internal pack pressure (Pi), the position (U) of the pack wall (3) being registered by a sensor (20) and likewise fed to the control device (28) as an input value, the control device (28) drawing conclusions about the tightness of the packing container (1) on the basis of the time variation of the position (U) of the pack wall (3), **characterized in that** the time variation of the pressure (P) prevailing in the bell-shaped housing (36) and the time variation of the position (U) of the pack wall (3) are linked to each other, the position (U3) of the pack wall (3) at a first predefined pressure (P3) in the interior (37) of the testing device (10) being registered, **in that** by using this position (U3), by means of a predefined constant (ΔU), a new position (U4) of the pack wall (3) is calculated by the control device (28), and **in that** the pressure (P4) in the interior (37) of the testing device (10) at the new position (U4) is used as a criterion for the tightness of the packing container (1).

2. Method according to Claim 1, **characterized in that** the pressure (P4) is used as the internal pack pressure (Pi).

3. Method according to Claim 1 or 2, **characterized in that** the constant (ΔU) is given by a first section of travel (ΔU1) owing to resilient behaviour of a part (40) of the testing device (10) and a second section of travel (ΔU2) owing to a movement of the pack wall (3).

4. Method of checking the tightness of evacuated packing containers (1) which each have at least one flexible pack wall (3), a testing device (10) having a bell-shaped housing (36) being brought into sealing contact with the flexible pack wall (3), whereupon the interior (37) of the testing device (10) has a vacuum applied to it whose magnitude is fed to a control device (28) as an input variable, so that the flexible pack wall (3) is moved from its original position as a result of the vacuum as soon as the pressure (P) in the bell-shaped housing (36) is lower than the internal pack pressure (Pi), the position (U) of the pack wall (3) being registered by a sensor (20) and likewise fed to the control device (28) as an input value, the control device (28) drawing conclusions about the tightness of the packing container (1) on the basis of the time variation of the position (U) of the pack wall (3), **characterized in that** the time variation of the pressure (P) prevailing in the bell-shaped housing (36) and the time variation of the position (U) of the pack wall (3) are linked to each other, the time variation of the position (U) of the pack wall (3) in a period between two times (t5, t6) at-the start of the checking of the packing container (1) owing to a resilient element (40) of the testing device (10) behaving in a similar way to the time variation of the pressure (P), and **in that** the time (t6) from which the time variation of the position (U) behaves in a dissimilar way to the time variation of the pressure (P) is used as a criterion for the tightness of the packing container (1).

5. Method according to Claim 4, **characterized in that** the time variation of the position (U) of the pack wall (3) exhibits a point of inflection at the time (t6).

6. Method according to Claim 5, **characterized in that** the control device (28) registers the point of inflection of the time variation of the position (U) of the pack wall (3) as such at a time (t7) which lies after the time (t6) of the point of inflection, and **in that** the pressure (P) at this later time (t7) is assessed as the internal pack pressure (Pi).

7. Method according to Claim 4, **characterized in that** in addition the time is registered at which the slope of the time variation of the position (U) of the pack wall (3) exceeds a predefined limiting value, and **in that** the pressure (P) at this time is assessed as the internal pack pressure (Pi).

8. Device (10) for carrying out the method according to one of Claims 1 to 3, having a bell-shaped housing (36) which is arranged in sealing contact with a flexible pack wall (3), it being possible for the interior (37) of the housing (36) to be evacuated by means of a vacuum source (33), having a vacuum sensor (25) for registering the pressure (P) in the interior (37), and having a distance sensor (20) for registering the position (U) of the flexible pack wall (3) of the packing container (1), which converts the position (U) into a voltage signal, **characterized in that** the device contains a control device (28) which is set up in such a way that the time variation of the pressure (P) prevailing in the bell-shaped housing (36) and the time variation of the position (U) of the pack wall (3) are linked to each other, the position (U3) of the pack wall (3) at a first predefined pressure (P3) in the interior (37) of the testing device (10) being registered, **in that** by using this position (U3), by means of a predefined constant (ΔU), a new position (U4) of the pack wall (3) is calculated by the control device (28), and **in that** the pressure (P4) in the interior (37) of the testing device (10) at the new position (U4) is used as a criterion for the tightness of the packing container (1).

9. Device according to Claim 8, **characterized in that** the housing (3) has a resilient sealing element (40) on the side facing the pack wall (3).

10. Device (10) for carrying out the method according to one of Claims 4 to 7, having a bell-shaped housing (36) which is arranged in sealing contact with a flexible pack wall (3), it being possible for the interior (37) of the housing (36) to be evacuated by means of a vacuum source (33), having a vacuum sensor (25) for registering the pressure (P) in the interior (37), and having a distance sensor (20) for registering the position (U) of the flexible pack wall (3) of the packing container (1), which converts the position (U) into a voltage signal, **characterized in that** the device contains a control device (28) which is set up in such a way that the time variation of the pressure (P) prevailing in the bell-shaped housing (36) and the time variation of the position (U) of the pack wall (3) are linked to each other, the time variation of the position (U) of the pack wall (3) in a period between two times (t5, t6) at the start of the checking of the packing container (1) owing to a resilient element (40) of the testing device (10) behaving in a similar way to the time variation of the pressure (P), and **in that** the time (t6) from which the time variation of the position (U) behaves in a dissimilar way to the time variation of the pressure (P) is used as a criterion for the tightness of the packing container (1).

11. Device according to one of Claims 8 to 10, **characterized in that** the distance sensor (20) has a sensing element (34) which is acted on by the force from a spring (32) and which can be brought into contact with the pack wall (3).

12. Device according to Claim 11, **characterized in that** the sensing element (34) is disc-like.

13. Device according to one of Claims 8 to 12, **characterized in that** the distance sensor is designed as an inductive sensor (20).

## Revendications

1. Procédé de contrôle de l'étanchéité de contenants d'emballage (1), évacués, ayant au moins une paroi d'emballage (3), souple,
selon lequel
on met un dispositif de contrôle (10) avec un boîtier (36) en forme de cloche en contact d'appui étanche avec la paroi souple (3) de l'emballage, puis on met la chambre (37) du dispositif de contrôle (10) en dépression suivant un niveau dépendant de la grandeur fournie comme grandeur d'entrée à une installation de commande (28) de façon que la paroi souple (3) de l'emballage soit déplacée du fait de la dépression à partir de sa position d'origine, dès que la pression (P) dans le boîtier en forme de cloche (36) devient inférieure à la pression intérieure (Pi) de l'emballage,
on saisit la position (U) de la paroi (3) de l'emballage avec un capteur (20) et on applique cette information également à l'installation de commande (28) comme grandeur d'entrée qui, du fait de l'évolution chronologique de la position (U) de la paroi d'emballage (3) permet de conclure à l'étanchéité de l'emballage (1),
**caractérisé en ce qu'**
on combine l'évolution chronologique de la pression (P) régnant dans le boîtier (36) en forme de cloche et l'évolution chronologique de la position (U) de la paroi d'emballage (3), en saisissant la position (U3) de la paroi d'emballage (3) à une première pression prédéterminée (P3) dans la chambre (37) du dispositif de contrôle (10), puis à l'aide de cette position (U3) et d'une constante prédéterminée (ΔU), on calcule une nouvelle position (U4) de la paroi (3) de l'emballage avec l'installation de commande (28), et
la pression (P4) dans la chambre (37) du dispositif de contrôle (10) est utilisée pour la nouvelle position (U4) comme critère d'étanchéité de l'emballage (1).

2. Procédé selon la revendication 1,
**caractérisé en ce que**
la pression (P4) est considérée comme pression intérieure (Pi) de l'emballage.

3. Procédé selon la revendication 1 ou 2,
**caractérisé en ce que**
la constante (ΔU) se compose d'un premier segment (ΔU1) lié au comportement élastique d'une partie (40) du dispositif de contrôle (10) et d'un second segment (ΔU2) lié au mouvement de la paroi d'emballage (3).

4. Procédé de contrôle de l'étanchéité d'emballage (1) sous vide ayant au moins une paroi d'emballage souple (3), selon lequel
on met un dispositif de contrôle (10) ayant un boîtier (36) en forme de cloche en contact d'appui étanche avec la paroi souple (3) de l'emballage, puis on crée dans la chambre (37) du dispositif de contrôle (10) une dépression dont l'intensité est fournie à une installation de commande (28) comme grandeur d'entrée de façon que la paroi souple (3) de l'emballage soit déformée à partir de sa position initiale sous l'effet de la dépression dès que la pression (P) dans le boîtier (36) en forme de cloche devient inférieure à la pression interne (Pi) de l'emballage,
la position (U) de la paroi d'emballage (3) étant captée par un capteur (20) pour être fournie également comme grandeur d'entrée à l'installation de commande (28) qui, du fait de l'évolution chronologique de la position (U) de la paroi de boîtier (3), conclut à l'étanchéité de l'emballage (1),
**caractérisé en ce que**
l'on combine l'évolution dans le temps de la pression (P) régnant dans le boîtier (36) en forme de cloche et l'évolution dans le temps de la position (U) de la paroi d'emballage (3),
l'évolution dans le temps de la position (U) de la paroi d'emballage (3) dans un intervalle compris entre deux instants (t5, t6), au début du contrôle de l'emballage (1), sous l'effet d'un élément élastique (40) du dispositif de contrôle (10), a un comportement analogue à celui de l'évolution de la pression (P) dans le temps, et l'instant (t6) à partir duquel l'évolution dans le temps de la position (U) ne se comporte plus de façon analogue à l'évolution dans le temps de la pression (P) est utilisé comme critère d'étanchéité de l'emballage (1).

5. Procédé selon la revendication 4,
**caractérisé en ce que**
l'évolution dans le temps de la position (U) de la paroi d'emballage (3) à l'instant (t6) présente un point d'inflexion.

6. Procédé selon la revendication 5,
**caractérisé en ce que**
l'installation de commande (28) saisit le point d'inflexion de l'évolution dans le temps de la position (U) de la paroi d'emballage (3) en tant que tel à un instant (t7) postérieur à l'instant (t6) du point d'inflexion et la pression (P) correspondant à cet instant ultérieur (t7) est considérée comme pression intérieure (Pi) de l'emballage.

7. Procédé selon la revendication 4,
**caractérisé en ce qu'**
on saisit en outre l'instant auquel la pente de l'évolution dans le temps dans la position (U) de la paroi d'emballage (3) dépasse une valeur limite prédéterminée et on exploite la pression (P) à cet instant comme pression interne (Pi) de l'emballage.

8. Dispositif (10) pour mettre en oeuvre le procédé selon l'une quelconque des revendications 1 à 3, comprenant un boîtier (36) en forme de cloche mis en contact d'appui étanche avec une paroi souple (3) de l'emballage, la chambre (37) du boîtier (36) étant mise sous vide par une source à dépression (33), un capteur de dépression (25) pour saisir la pression (P) régnant dans la chambre (27) et un capteur de distance (20) pour détecter la position (U) de la paroi souple (3) de l'emballage (1) qui convertit la position (U) en un signal de tension,
**caractérisé en ce que**
le dispositif comporte une installation de commande (28) combinant l'évolution dans le temps de la pression (P) régnant dans le boîtier (36) en forme de cloche et l'évolution dans le temps de la position (U) de la paroi d'emballage (3),
la position (U3) de la paroi d'emballage (3) étant saisie à une première pression prédéterminée (P3) dans la chambre (37) du dispositif de contrôle (10),
à partir de cette position (U3) et avec une constante prédéterminée (ΔU), on calcule une nouvelle position (U4) de la paroi d'emballage (3) avec l'installation de commande (28), et la pression (P4) dans la chambre (37) du dispositif de contrôle (10) sert de critère d'étanchéité de l'emballage (1) pour la nouvelle position (U4).

9. Dispositif selon la revendication 8.
**caractérisé en ce que**
le boîtier (36) comporte un élément d'étanchéité élastique (40) du côté de la paroi de l'emballage (3).

10. Dispositif (10) pour la mise en oeuvre du procédé selon l'une quelconque des revendications 4 à 7, comportant un boîtier (36) en forme de cloche en contact d'appui étanche avec une paroi souple (3) de l'emballage, la chambre (37) du boîtier (36) étant mise sous vide par une source de dépression (33),
un capteur de dépression (25) pour saisir la pression (P) dans la chambre (37) et un capteur de distance (20) pour saisir la position (U) de la paroi souple (3) de l'emballage (1) qui convertit la position (U) en un signal de tension,
**caractérisé en ce que**
le dispositif comporte une installation de commande (28) combinant l'évolution dans le temps de la pression (P) régnant dans le boîtier (36) en forme de cloche et l'évolution dans le temps de la position (U) de la paroi d'emballage (3),
l'évolution dans le temps de la position (U) de la paroi d'emballage (3) dans un intervalle de temps compris entre deux instants (t5, t6) au début du contrôle de l'emballage (1), du fait d'un élément élastique (40) du dispositif de contrôle (10), se comporte de façon analogue à l'évolution dans le temps de la pression (P), et
l'instant (t6) à partir duquel l'évolution dans le temps de la position (U) ne se comporte plus de façon analogue à l'évolution dans le temps de la pression (P) est utilisé comme critère de l'étanchéité de l'emballage (1).

11. Dispositif selon l'une quelconque des revendications 8 à 10,
**caractérisé en ce que**
le capteur de distance (20) comporte un élément de détection (34) sollicité par la force d'un ressort (32) et qui peut être mis en contact d'appui avec la paroi (3) de l'emballage.

12. Dispositif selon la revendication 11,
**caractérisé en ce que**
l'élément de détection (34) est en forme de disque.

13. Dispositif selon l'une quelconque des revendications 8 à 12,
**caractérisé en ce que**
le capteur de distance est un capteur inductif (20).
